# EUROPÄISCHE PATENTANMELDUNG

(11) **EP 3 588 607 A1**
(43) Veröffentlichungstag der Anmeldung: **01.01.2020**
(21) Anmeldenummer: 18179766.3
(22) Anmeldetag: 26.06.2018
(51) Int. Cl.: H01M 2/10, H01M 2/34

(54) **AKKUPACK MIT WENIGSTENS EINER POUCHZELLE**

(71) Anmelder: Hilti Aktiengesellschaft, 9494 Schaan (LI)
(72) Erfinder: Lepiorz, Matthias, 91413 Neustadt/Aisch (DE); Ender, Moses, 9470 Buchs (CH); Stanger, Robert, 87600 Kaufbeuren (DE)
(74) Vertreter: Hilti Aktiengesellschaft Corporate Intellectual Property

(57) **Zusammenfassung**

Akkupack mit wenigstens einer Pouchzelle, wobei der Akkupack wenigstens ein elektrisch leitfähiges Filament aufweist, das die Pouchzelle zumindest abschnittsweise derart umgibt, dass ein Aufblähen der Pouchzelle ein Zertrennen des Filaments bewirkt.

## Beschreibung

Die vorliegende Erfindung betrifft einen Akkupack mit wenigstens einer Pouchzelle.

Akkupacks sowie Pouchzellen sind grundsätzlich aus dem Stand der Technik bekannt. Ebenfalls aus dem Stand der Technik bekannt ist das Phänomen des sogenannten Swellings, auch Ausdehnen oder Aufblähen genannt. Dies ist problematisch, da es zu einem Aufplatzen einer Außenhülle der Pouchzelle führen kann.

Es ist Aufgabe der vorliegenden Erfindung ein Akkupack zu schaffen, der die Grundlage für eine erhöhte Betriebssicherheit bietet.

Die Aufgabe wird dadurch gelöst, dass der Akkupack wenigstens ein elektrisch leitfähiges Filament aufweist, das die Pouchzelle zumindest abschnittsweise derart umgibt oder begrenzt, dass ein Aufblähen der Pouchzelle ein Zertrennen des Filaments bewirkt.

Das erfindungsgemäß vorgesehene Filament bietet die Grundlage für ein effektives Erfassungs- oder Überwachungssystem, mittels dem ein Swelling ein oder mehrerer Pouchzellen in einem Akkupack festgestellt werden kann.

In einer besonders bevorzugten Ausgestaltung ist das Filament Teil eines Rahmens, der die Pouchzelle vorzugsweise käfigartig umgibt. Der Rahmen kann starr ausgebildet sein, um einem Aufblähen der Pouchzelle zumindest zeitweise entgegenzuwirken. Der Rahmen kann selbst aus Kunststoff bestehen oder einen solchen aufweisen. Vorzugsweise weist der Rahmen ein oder mehrere elektrisch leitfähige Filamente auf.

In einer besonders bevorzugten Ausgestaltung ist dem Akkupack ein Sensorschaltkreis zugeordnet, mittels dem das Zertrennen des Filaments detektiert werden kann. Vorzugsweise ist der Sensorschaltkreis vom Akkupack umfasst. Alternativ oder zusätzlich kann ein solcher Sensorschaltkreis beispielsweise in einer elektrischen Handwerkzeugmaschine vorgesehen sein. In diesem Fall weist der Akkupack zumindest eine elektrische und/oder signaltechnische Verbindung zwischen dem elektrisch leitfähigen Filament und der elektrischen Handwerkzeugmaschine auf.

Der Sensorschaltkreis kann beispielsweise als Unterbrecherschaltkreis ausgebildet sein. Dies kann beispielsweise durch ein in Reihe mit dem elektrischen Filament geschalteten Spannungssensor realisiert werden. Wird das Filament durch das Aufblähen der Pouchzelle zertrennt, kommt ein Stromfluss zum Erliegen, eine über dem Spannungssensor abfallende Spannung wird zu null. Alternativ oder zusätzlich kann ein Zertrennen des Filaments beispielsweise durch Messen eines Stromflusses durch das Filament oder die Filamente erfolgen.

Es hat sich als vorteilhaft herausgestellt, wenn dem Akkupack ein Steuerschaltkreis zugeordnet ist, der, wenn der Sensorschaltkreis das Zertrennen des Filaments detektiert hat, eine Stromentnahme aus dem Akkupack oder der Pouchzelle unterbricht oder reduziert. Vorzugsweise ist der Steuerschaltkreis vom Akkupack umfasst. Alternativ oder zusätzlich kann ein Steuerschaltkreis von einer Handwerkzeugmaschine umfasst sein.

In einer besonders bevorzugten Ausgestaltung ist der Steuerschaltkreis ausgebildet, einen Ladestrom zu unterbrechen oder zu reduzieren, wenn der Sensorschaltkreis das Zertrennen des Filaments detektiert hat. Vorteilhafterweise können derart im Akkupack verbliebene unbeschädigte Pouchzellen geschützt werden.

In einer weiteren bevorzugten Ausgestaltung ist dem Akkupack ein Signalelement zugeordnet, beispielsweise in Form einer LED, welches, wenn der Sensorschaltkreis das Zertrennen des Filaments detektiert hat, eine Beschädigung der Pouchzelle signalisiert. Das Signalelement ist vorzugsweise vom Akkupack umfasst. Alternativ oder zusätzlich kann das Signalelement von einer elektrischen Handwerkzeugmaschine, die durch das Akkupack versorgt wird, umfasst sein. Vorteilhafterweise kann einem Benutzer derart das Versagen ein oder mehrerer Pouchzellen des Akkupacks angezeigt werden. Durch diese Information kann vorteilhafterweise ein rechtzeitiger Austausch des Akkupacks erwogen werden.

Es hat sich als vorteilhaft herausgestellt, wenn die Pouchzelle einen Pluskontakt und einen Minuskontakt aufweist, über die die Pouchzelle elektrisch kontaktiert und somit beladen und entladen werden kann. Vorzugsweise ist das Filament und/oder der Rahmen galvanisch vom Pluskontakt und/oder galvanisch vom Minuskontakt getrennt.

Die Pouchzelle kann wenigstens einen Lithium-Ionen-Akkumulator aufweisen oder aus einem solchen bestehen. Vorzugsweise ist die Pouchzelle flächig ausgebildet. Die Pouchzelle kann eine flache Zelloberfläche aufweisen, die sich parallel zum Pluskontakt und Minuskontakt erstreckt. Vorteilhafterweise ist der Pluskontakt als Pluskontaktfahne und/oder der Minuskontakt als Minuskontaktfahne ausgebildet. Es hat sich als vorteilhaft herausgestellt, wenn die Kontaktfahnen in seitlicher Richtung von der Pouchzelle abstehen.

In einer besonders bevorzugten Ausgestaltung weist das Filament und/oder der Rahmen wenigstens eine Sollbruchstelle auf. Die Sollbruchstelle kann in Form einer niederohmigen Sicherung ausgestaltet sein. Ein Zertrennen des Filaments und/oder des Rahmens an der Sollbruchstelle, was durch das unerwünschte Swelling der Pouchzelle bewirkt wird, kann durch den bereits beschriebenen Sensorschaltkreis detektiert werden.

Vorzugsweise weist der Akkupack eine Mehrzahl von Pouchzellen auf, die gestapelt sind. Vorzugsweise weist der Rahmen zwischen zwei benachbarten Pouchzellen zumindest eine Sollbruchstelle auf.

In einer besonders bevorzugten Ausgestaltung weist der Akkupack eine Wärmeleitplatte, vorzugsweise eine metallische Wärmeleitplatte auf. Derart kann eine in der Pouchzelle entstehende Wärme gleichmäßig abgeleitet werden. Es hat sich als ebenfalls vorteilhaft herausgestellt, wenn der Akkupack eine Volumenausgleichsplatte mit einem nachgiebigen Volumenausgleichsmaterial aufweist. Bei konstanten Außenabmessungen des Akkupacks bzw. einer Akkupackzelle kann die Volumenausgleichsplatte ein Swelling (Volumenausdehnung der Pouchzelle) kompensieren oder aber zumindest teilweise kompensieren. Besonders bevorzugt ist die Pouchzelle sandwichartig zwischen der Wärmeleitplatte und der Volumenausgleichsplatte angeordnet.

Es hat sich als vorteilhaft herausgestellt, wenn ein Stapel aus Wärmeleitplatte, Pouchzelle und Volumenausgleichsplatte jeweils von einem starren Rahmen, der zumindest ein elektrisch leitfähiges Filament aufweist, umfasst ist. Vorzugsweise bilden eine Wärmeleitplatte, eine Pouchzelle und eine Volumenausgleichsplatte, die sandwichartig verbunden und von einem Rahmen eingehaust sind, ein Pouchzellen-Modul.

In einer weiteren bevorzugten Ausgestaltung weist der Akkupack eine Mehrzahl von Pouchzellen auf, die jeweils zumindest von einem eigenen Filament und/oder von einem eigenen Rahmen umgeben sind. Ein Akkupack kann mehrere Pouchzellen-Module aufweisen.

Die Erfindung wird ebenfalls gelöst durch eine elektrische Handwerkzeugmaschine mit einem vorgeschriebenen Akkupack.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine Pouchzelle des Standes der Technik;
- Fig. 2: ein erstes bevorzugtes Ausführungsbeispiel eines erfindungsgemäßen Akkupacks, dargestellt ohne Filament oder Rahmen;
- Fig. 3: das Ausführungsbeispiel der Fig. 2 untergebracht in einem Rahmen;
- Fig. 4: das Ausführungsbeispiel der Fig. 2 mit aufgeblähter Pouchzelle;
- Fig. 5: ein zweites bevorzugtes Ausführungsbeispiel eines erfindungsgemäßen Akkupacks mit zwei Pouchzellen-Modulen;
- Fig. 6: ein drittes Ausführungsbeispiel eines erfindungsgemäßen Akkupacks mit aufgeplatzter Pouchzelle und gebrochenem Rahmen;
- Fig. 7: ein viertes bevorzugtes Ausführungsbeispiel eines erfindungsgemäßen Akkupacks mit Sensorschaltkreis; und
- Fig. 8: ein ffünftes bevorzugtes Ausführungsbeispiel eines erfindungsgemäßen Akkupacks mit Sensorschaltkreis und Steuerschaltkreis.

### Ausführungsbeispiele :

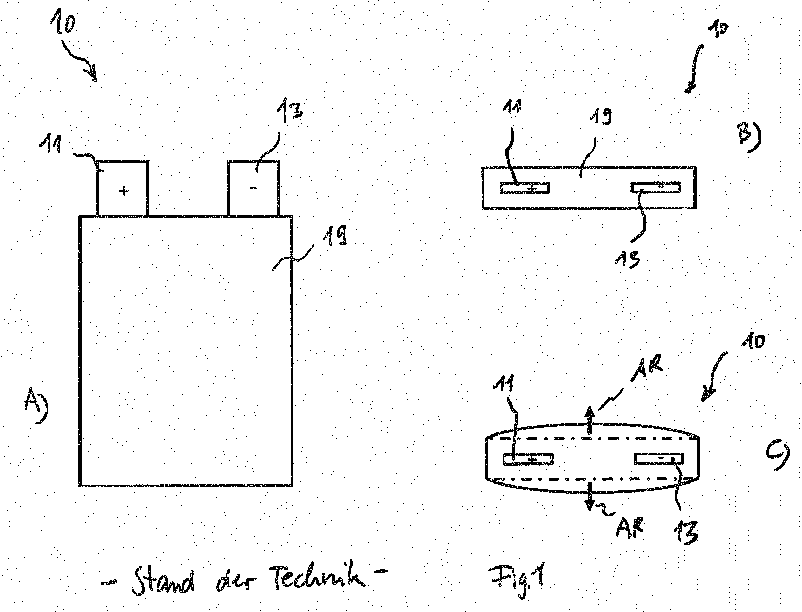

Eine Pouchzelle des Standes der Technik ist in Fig. 1 dargestellt. Dabei zeigt Fig. 1 eine Pouchzelle 10 mit einem flächig ausgebildeten flachen Gehäuse 19. Die Pouchzelle 10 weist einen metallischen Pluskontakt 11 und einen metallischen Minuskontakt 13 auf. Über den Pluskontakt 11 und den Minuskontakt 13 kann die Pouchzelle 10 elektrisch kontaktiert und so beladen und entladen werden.

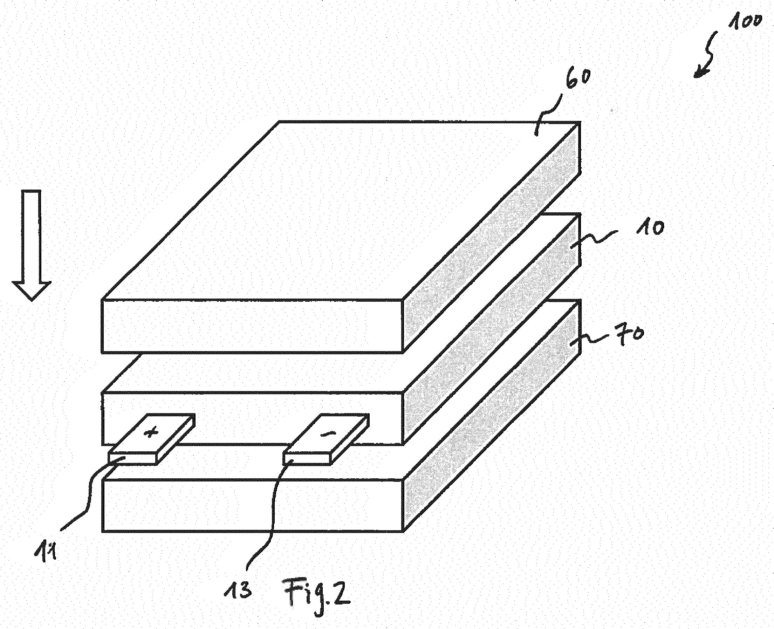

Fig. 1A zeigt die Pouchzelle 10 in einer Draufsicht. Fig. 2B zeigt die Stirnseite der Pouchzelle 10 der Fig. 1A. Die Pouchzelle 10 der Fig. 1B ist eine neuwertige Pouchzelle, das heißt ein Aufblähen der Pouchzelle 10 hat noch nicht eingesetzt. Im Gegensatz dazu zeigt die Fig. 1C eine gealterte, aufgeblähte Pouchzelle. Diese hat sich beidseitig in Aufblährichtung AR aufgebläht.

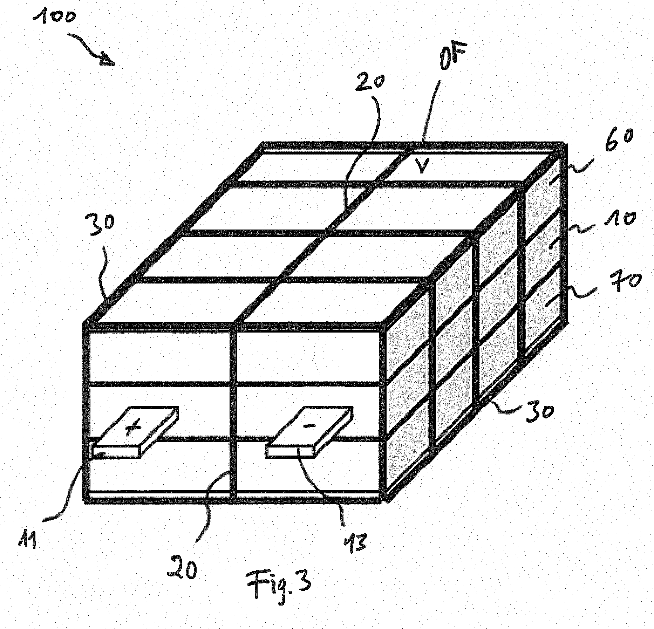

Fig. 2 zeigt den Aufbau eines erfindungsgemäßen Akkupacks, zunächst allerdings ohne das erfindungsgemäß bereitgestellte elektrisch leitfähige Filament 20 (vgl. Fig. 3).

Der Akkupack 100 der Fig. 2 weist eine Pouchzelle 10, eine metallische Wärmeleitplatte 60 und eine Volumenausgleichsplatte 70 auf. Werden die gezeigten Komponenten in Pfeilrichtung zusammengebracht, so entsteht ein Akkupack 100, bei dem die Pouchzelle 10 sandwichartig zwischen Wärmeleitplatte 60 und Volumenausgleichsplatte angeordnet ist. Dies ist beispielsweise aus Fig. 3 ersichtlich.

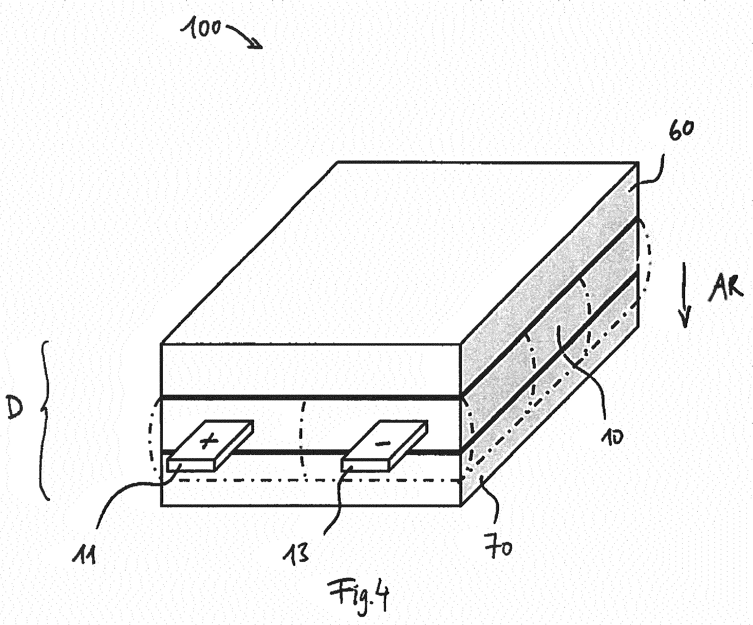

Das Akkupack 100 der Fig. 3 weist zusätzlich zur bereits erwähnten kompetenten Pouchzelle 10, Wärmeleitplatte 60 und Volumenausgleichsplatte 70 einen Rahmen 30 auf. Der Rahmen 30 umgibt den gesamten Sandwichaufbau aus Wärmeleitplatte 60, Pouchzelle 10 und Volumenausgleichsplatte 70. Der Rahmen 30 ist vorliegend aus Kunststoff gebildet und weiterhin starr ausgebildet, um einem Aufblähen der Pouchzelle 10 (vgl. Fig. 4) entgegenzuwirken.

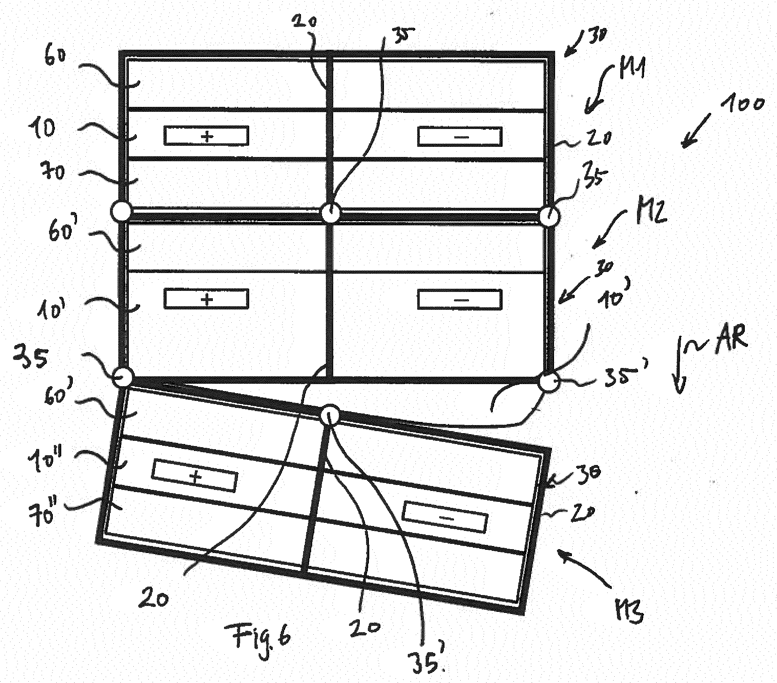

Der Akkupack 300 weist ein elektrisch leitfähiges Filament 20 auf, das die Pouchzelle 10 zumindest abschnittsweise umgibt. Im vorliegend dargestellten Ausführungsbeispiel ist das Filament 20 Teil des Rahmens 30. Auch wenn der Rahmen 30 selbst nicht elektrisch leitfähig ist, bildet das Filament 20 jedoch eine elektrisch leitfähige Stromleitung, die beim Aufblähen der Pouchzelle 10 durchtrennt wird (vgl. Fig. 6).

Im Ausführungsbeispiel der Fig. 3 verläuft das elektrisch leitfähige Filament 20 entlang einer Oberfläche OF des Akkupacks 100. Da der Akkupack 100 wie in Fig. 3 gezeigt, die Pouchzelle 10 einschließt, ist auch die Pouchzelle 10 zumindest abschnittsweise von dem elektrisch leitfähigen Filament 20 umgeben.

Fig. 4 zeigt nun zunächst eine aufgeblähte, das heißt gealterte Pouchzelle 10 im stapelhaften Aufbau, der bereits aus Fig. 3 bekannt ist (ohne Rahmen 30). Wie durch die gestrichelte Linie angedeutet ist, geht ein Aufblähen der Pouchzelle 10, das heißt eine Volumenvergrößerung, zulasten des Volumens der nachgiebigen Volumenausgleichsplatte 70, die an Dicke verliert. Dabei dehnt sich die Pouchzelle 10 in Aufblährichtung AR aus. Wie in der Fig. 4 gut zu sehen ist, verbleiben die Dicke D des Stapels aus Wärmeleitplatte 60, Pouchzelle 10, Volumenausgleichsplatte 70 konstant.

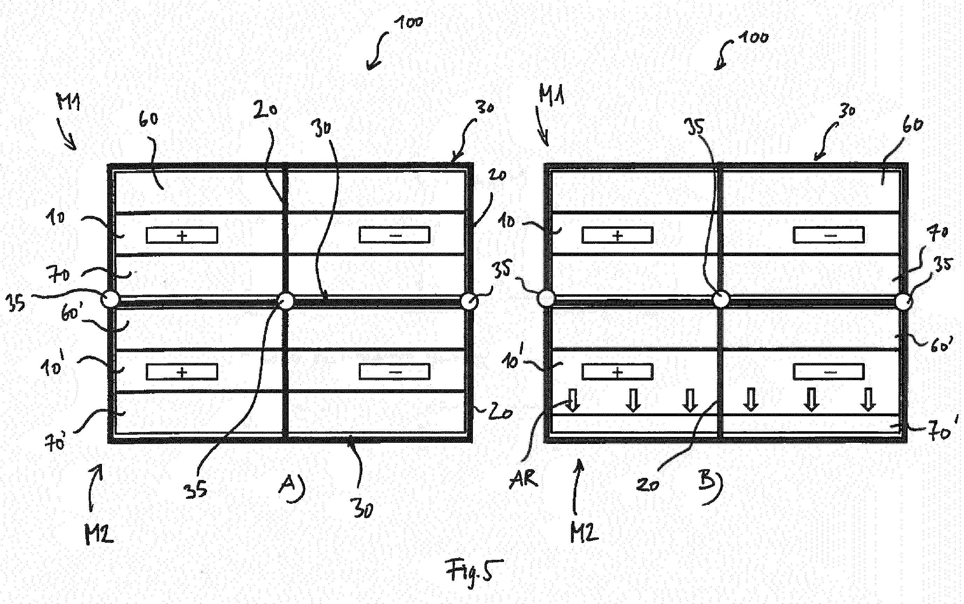

Fig. 5 zeigt nunmehr ein Akkupack 100 mit zwei Pouchzellen 10, 10'. Ein erstes Modul M1 ist gebildet aus der ersten Pouchzelle 10, der ersten Wärmeleitplatte 60 und der ersten Volumenausgleichsplatte 70. Ein zweites Modul M2 ist definiert durch die zweite Pouchzelle 10', die zweite Wärmeleitplatte 60' und die zweite Volumenausgleichsplatte 70'.

Sowohl das erste Modul M1 als auch das zweite Modul M2 sind von einem Rahmen 30 umgeben, der die Module M1 und M2 starr umschließt. Teil des Rahmens sind mehrere elektrisch leitfähige Filamente 20, die jeweils eine Sollbruchstelle 35 aufweisen. Die Sollbruchstellen 35 sind jeweils in Form einer niederohmigen Sicherung ausgebildet.

Fig. 5A zeigt den Akkupack 100 im Neuzustand, das heißt die erste Pouchzelle 10 und die zweite Pouchzelle 10' sind nicht aufgebläht.

Der gealterte Akkupack 100 ist in Fig. 5B dargestellt. Es ist gut zu erkennen, dass sich die zweite Pouchzelle 10' in Aufblährichtung AR ausgedehnt hat. Dabei geht eine Volumenänderung der zweiten Pouchzelle 10' zulasten der zweiten Volumenausgleichsplatte 70', die nachgiebig ausgebildet ist. Aufgrund des starr ausgebildeten Rahmens wird einem weiteren Aufblähen der zweiten Pouchzelle 10' zunächst entgegengewirkt. Wie ebenfalls der Fig. B entnommen werden kann, sind die Sollbruchstellen 35 intakt, das heißt die Ausdehnung der zweiten Pouchzelle 10' hat noch kein kritisches Maß überschritten.

Ein kritisches Aufblähen einer Pouchzelle soll nun mit Bezug auf Fig. 6 beschrieben werden. Fig. 6 zeigt einen Akkupack 100 mit insgesamt drei Modulen M1, M2, M3. Jedes der Module M1, M2 und M3 ist dabei von einem eigenen Rahmen 30 umgeben bzw. begrenzt. Teil jedes Rahmens 30 ist ein elektrisch leitfähiges Filament 20, das an den Verbindungsstellen zwischen den einzelnen Modulen M1, M2 und M3 jeweils eine Sollbruchstelle 35 aufweist. Mit anderen Worten markieren die Sollbruchstellen 35 auch Verbindungsstellen zwischen benachbarten Modulen M1, M2; M2,M3.

Wie der Fig. 6 entnommen werden kann, ist das erste Modul M1 und das dritte Modul M3 vollständig intakt, das heißt die erste Pouchzelle 10 und die dritte Pouchzelle 10" sind nicht aufgebläht.

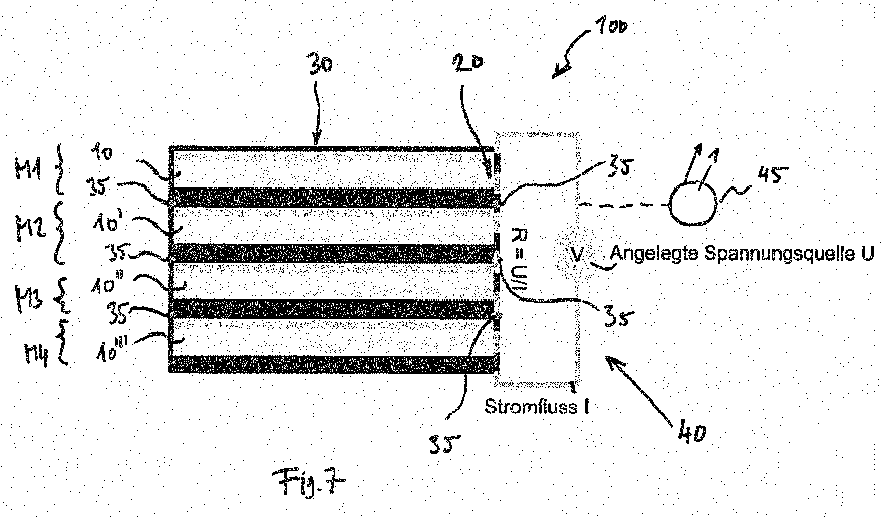

Beim mittleren Modul, dem zweiten Modul M2, ist die zweite Pouchzelle 10' gealtert, das heißt in Aufblährichtung AR deutlich aufgebläht. Dieses Aufblähen hat ein Aufbrechen des Rahmens 30 an den Sollbruchstellen 35' (mittig und rechts) bewirkt. Mit anderen Worten ist an diesen Sollbruchstellen 35' ein jeweiliges Filament 20 bzw. der Rahmen 30 des Akkupacks 100 zertrennt. Diese Unterbrechungen können für eine signaltechnische Auswertung verwendet werden, wie im weiteren Verlauf mit Bezug auf Fig. 7 erläutert wird.

Fig. 7 zeigt ein Akkupack 100 mit insgesamt vier Modulen M1, M2, M3 und M4, die durch einen starren Rahmen 30 eingehaust sind. An der rechten Seite des Akkupacks 100 ist ein elektrisch leitfähiges Filament 20 als Teil des Rahmens 30 dargestellt. Das Filament 20 weist drei Sollbruchstellen 35 auf, die jeweils an den Übergängen benachbarter Module befindlich sind.

Das Filament 20 ist reihengeschaltet mit einem vom Akkupack 100 umfassten Sensorschaltkreis 40. Der Sensorschaltkreis 40 weist eine Spannungsquelle U auf, mit der das elektrisch leitfähige Filament 20 beaufschlagt ist. Dies führt zu einem Stromfluss I durch das elektrisch leitfähige Filament 20. Durch ein etwaiges Aufblähen einer der Pouchzellen 10 bis 10'" würde die entsprechende Sollbruchstelle 35 durchtrennt und ein Stromfluss I durch den Sensorschaltkreis 40 als unterbrochen detektiert werden.

Beispielhaft weist der Akkupack 100 der Fig. 7 auch ein Signalelement 45 in Form einer LED auf, die mit dem Sensorschaltkreis 40 signalverbunden ist. Detektiert der Sensorschaltkreis 40 das Zertrennen des Filaments 20 an der Sollbruchstelle 35, ist also eine der Pouchzellen 10 bis 10'" beschädigt, kann ein Benutzer über das Signalelement 45 optisch über eine solche Beschädigung informiert werden. Dabei sind beispielsweise verschiedene Blinkintervalle und/oder Farben der LED möglich, um beispielsweise die Beschädigung einzelner oder mehrerer Pouchzellen darzustellen bzw. unterscheiden zu können.

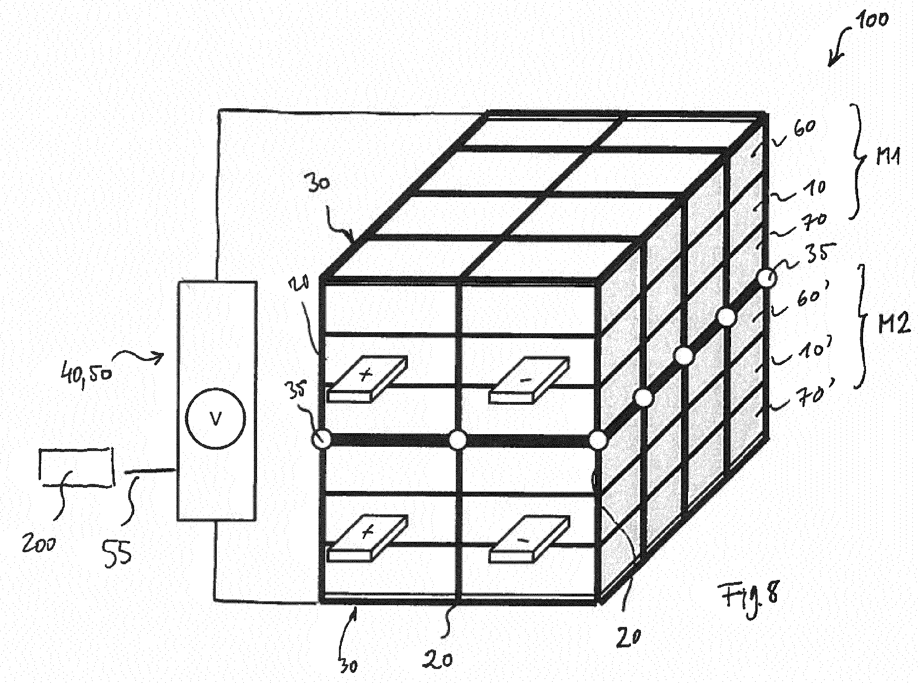

Fig. 8 zeigt schließlich ein weiteres Ausführungsbeispiel eines erfindungsgemäßen Akkupacks 100. Der Akkupack 100 in Fig. 8 weist insgesamt zwei Module M1 und M2 auf, entspricht also im Wesentlichen dem mit Bezug auf Fig. 5 beschriebenen Ausführungsbeispiel.

Der Akkupack 100 der Fig. 8 weist zusätzlich zu dem bereits mit Bezug auf Fig. 7 beschriebenen beispielhaften Sensorschaltkreis 40 einen Steuerschaltkreis 50 auf. Der Steuerschaltkreis 50 ist ausgebildet, eine Stromentnahme aus dem Akkupack 100 oder einer jeweiligen Pouchzelle 10, 10' zu reduzieren, wenn der Sensorschaltkreis 40 ein Zertrennen des Filaments 20 bzw. des Rahmens 30 an der Sollbruchstelle 35 detektiert hat.

Der Steuerschaltkreis 50 kann ausgebildet sein, eine Stromentnahme aus dem Akkupack 100 oder der Pouchzelle 10 in Gänze zu unterbrechen. Vorteilhaft ist jedoch eine Reduktion der jeweiligen Stromentnahme, wodurch die Laufzeit des gesamten Akkupacks 100 vergleichsweise etwas länger ausfallen kann.

Im vorliegend dargestellten Ausführungsbeispiel sind der Sensorschaltkreis 40 und der Steuerschaltkreis 50 miteinander integriert ausgebildet. Des Weiteren ist der Steuerschaltkreis 50 ausgebildet, einen Ladestrom zu reduzieren, wenn der Sensorschaltkreis das Zertrennen ein oder mehrerer Filamente 20 detektiert hat. Die Anforderung eines reduzierten Ladestroms von einem Ladegerät 200 kann beispielsweise über einen Signalanschluss 55 erfolgen, der den Steuerschaltkreis 50 mit einem Ladegerät 200 verbindet. Mit anderen Worten kann ein beschädigter Akkupack 100, das heißt ein Akkupack 100 mit wenigstens einer aufgeschwollenen Pouchzelle (hier nicht gezeigt) diesen Beschädigungszustand dem Ladegerät 200 mitteilen, sodass dieses entsprechend mit reduziertem Ladestrom ein Aufladen des Akkupacks 100 durchführt. Alternativ oder zusätzlich könnte das Akkupack 100 über einen Signalanschluss 55 auch mit einer hier nicht gezeigten Handwerkzeugmaschine kommunizieren, um beispielsweise den maximal aus dem Akkupack 100 abrufbaren Strom zu übermitteln.

### Bezugszeichenliste

- 10...10"': Pouchzelle
- 11: Pluskontakt
- 13: Minuskontakt
- 19: Gehäuse
- 20: Filament
- 30: Rahmen
- 35, 35': Sollbruchstelle
- 40: Sensorschaltkreis
- 45: Signalelement
- 50: Steuerschaltkreis
- 55: Signalanschluss
- 60...60'": Wärmeleitplatte
- 70...70'": Volumenausgleichsplatte
- 100: Akkupack
- 200: Ladegerät
- AR: Aufblährichtung
- D: Dicke
- I: Stromfluss
- OF: Oberfläche
- M1...M4: Module
- U: Spannungsquelle

## Patentansprüche

1. Akkupack (100) mit wenigstens einer Pouchzelle (10),
**dadurch gekennzeichnet, dass** der Akkupack (100) wenigstens ein elektrisch leitfähiges Filament (20) aufweist, das die Pouchzelle (10) zumindest abschnittsweise derart umgibt oder begrenzt, dass ein Aufblähen der Pouchzelle (10) ein Zertrennen des Filaments (20) bewirkt.

2. Akkupack (100) nach Anspruch 1,
**dadurch gekennzeichnet, dass** das Filament (20) Teil eines Rahmens (30) ist, der die Pouchzelle (10) vorzugsweise käfigartig umgibt.

3. Akkupack (100) nach Anspruch 1 oder 2,
**dadurch gekennzeichnet, dass** dem Akkupack (100) ein Sensorschaltkreis (40) zugeordnet ist, mittels dem das Zertrennen des Filaments (20) detektiert werden kann, wobei der Sensorschaltkreis (40) vorzugsweise vom Akkupack (100) umfasst ist.

4. Akkupack (100) nach Anspruch 3,
**dadurch gekennzeichnet, dass** dem Akkupack (100) einen Steuerschaltkreis (50) zugeordnet ist, der, wenn der Sensorschaltkreis (40) das Zertrennen des Filaments (20) detektiert hat, eine Stromentnahme aus dem Akkupack (100) oder der Pouchzelle (10) unterbricht oder reduziert, wobei der Steuerschaltkreis (50) vorzugsweise vom Akkupack (100) umfasst ist.

5. Akkupack (100) nach Anspruch 4,
**dadurch gekennzeichnet, dass** der Steuerschaltkreis (50) ausgebildet ist, einen Ladestrom zu unterbrechen oder zu reduzieren, wenn der Sensorschaltkreis (40) das Zertrennen des Filaments (20) detektiert hat.

6. Akkupack (100) nach einem der vorangehenden Ansprüche,
**dadurch gekennzeichnet, dass** die Pouchzelle (10) einen vorzugsweise metallischen Pluskontakt (11) und einen vorzugsweise metallischen Minuskontakt (13) aufweist über die die Pouchzelle (10) elektrisch kontaktiert und so beladen und entladen werden kann, wobei das Filament (20) galvanisch vom Pluskontakt (11) und/oder galvanisch vom Minuskontakt (13) getrennt ist.

7. Akkupack (100) nach einem der vorangehenden Ansprüche,
**dadurch gekennzeichnet, dass** das Filament (20) und/oder der Rahmen (30) wenigstens eine Sollbruchstelle (35) aufweist.

8. Akkupack (100) nach Anspruch 7,
**dadurch gekennzeichnet, dass** die eine Sollbruchstelle (35) in Form einer niederohmigen Sicherung ausgestaltet ist.

9. Akkupack (100) nach einem der Ansprüche 3 bis 9,
**dadurch gekennzeichnet, dass** dem Akkupack (100) ein Signalelement (45) zugeordnet ist, beispielsweise in Form einer LED, welches, wenn der Sensorschaltkreis (40) das Zertrennen des Filaments (20) detektiert hat, eine Beschädigung der Pouchzelle (10) signalisiert, wobei das Signalelement vorzugsweise vom Akkupack (100) umfasst ist.

10. Akkupack (100) nach einem der vorangehenden Ansprüche,
**dadurch gekennzeichnet, dass** der Akkupack (100) eine Wärmeleitplatte (60) und eine Volumenausgleichsplatte (70) aufweist zwischen denen die Pouchzelle (10) sandwichartig angeordnet ist.

11. Akkupack (100) nach vorangehenden Ansprüche 2 bis 9,
**dadurch gekennzeichnet, dass** der Rahmen (30) starr ausgebildet ist um einem Aufblähen der Pouchzelle (10) zumindest zeitweise entgegenzuwirken.

12. Akkupack (100) nach einem der vorangehenden Ansprüche,
**dadurch gekennzeichnet, dass** der Akkupack (100) eine Mehrzahl von Pouchzellen (10, 10', 10", 10"') aufweist, die jeweils zumindest von einem eigenen Filament (20) und/oder von einem eigenen Rahmen (30) umgeben oder begrenzt sind.

13. Elektrische Handwerkzeugmaschine mit einem Akkupack (100) nach einem der vorangehenden Ansprüche.
